# EUROPEAN PATENT APPLICATION

(11) **EP 4 001 817 A1**
(43) Date of publication of application: **25.05.2022**
(21) Application number: 21202000.2
(22) Date of filing: 11.10.2021
(51) Int. Cl.: F28D 9/00, F28F 17/00

(54) **INTEGRATED CONDENSING HEAT EXCHANGER AND WATER SEPARATOR**

(30) Priority: 13.11.2020 US 202017097750
(71) Applicant: Hamilton Sundstrand Corporation, Charlotte, NC 28217-4578 (US)
(72) Inventor: ROY, Robert J., West Springfield, MA, 01089 (US); BROUSSEAU, Guillaume Michael Kurczko, Woodstock, CT, 06281 (US)
(74) Representative: Dehns

(57) **Abstract**

An integrated condensing heat exchanger and water separator (28) includes a microporous graphite plate (48), one or more water passages (54) defined at a first side of the microporous graphite plate, and one or more air passages (52) defined at a second side of the microporous graphite plate opposite the first side. An air inlet (38) operably is connected to the one or more air passages to direct a flow of air through the one or more air passages at a first pressure, and a water inlet (30) is operably connected to the one or more water passages to direct a flow of water through the one or more water passages at a second pressure lower than the first pressure. The microporous graphite plate (48) is configured such that moisture condenses from the flow of air onto the second side and is wicked through the microporous graphite plate to the one or more water passages.

## Description

### BACKGROUND

Exemplary embodiments pertain to the art of environmental control systems for, for example, space vehicles.

Such environmental control systems typically include a temperature and humidity control system to provide a comfortable environment inside of the space vehicle. The typical system architecture includes a fan that directs space vehicle cabin air into a condensing heat exchanger to remove moisture from the cabin air, and a separate rotary water separator to remove condensate from the cabin air stream. The rotary water separator relies on centrifugal force to separate water from the airstream and requires significant power for operation. Further the typical condensing heat exchanger is expensive to produce and typically requires long lead times due to limited production.

### BRIEF DESCRIPTION

In one embodiment, an integrated condensing heat exchanger and water separator includes a microporous graphite plate, one or more water passages defined at a first side of the microporous graphite plate, and one or more air passages defined at a second side of the microporous graphite plate opposite the first side. An air inlet operably is connected to the one or more air passages to direct a flow of air through the one or more air passages at a first pressure, and a water inlet is operably connected to the one or more water passages to direct a flow of water through the one or more water passages at a second pressure lower than the first pressure. The microporous graphite plate is configured such that moisture condenses from the flow of air onto the second side and is wicked through the microporous graphite plate to the one or more water passages to join the flow of water.

Additionally or alternatively, in this or other embodiments a difference between the first pressure and the second pressure is maintained below a bubble point of the microporous graphite plate to prevent the ingress of the flow of air through the microporous graphite plate and into the one or more water passages.

Additionally or alternatively, in this or other embodiments the second pressure is sub-ambient.

Additionally or alternatively, in this or other embodiments the microporous graphite plate includes a plurality of first grooves at the first side to at least partially define the one or more water passages, and a plurality of second grooves at the second side to at least partially define the one or more air passages.

In another embodiment, a condensing heat exchanger and water separator includes a plurality of microporous graphite plates arranged in a stack, each microporous graphite plate having one or more water passages defined at a first side of the microporous graphite plate, and one or more air passages defined at a second side of the microporous graphite plate opposite the first side. An air inlet is operably connected to the one or more air passages to direct a flow of air through the one or more air passages at a first pressure, and a water inlet is operably connected to the one or more water passages to direct a flow of water through the one or more water passages at a second pressure lower than the first pressure. The plurality of microporous graphite plates are configured such that moisture condenses from the flow of air onto the second side and is wicked through the microporous graphite plates to the one or more water passages to join the flow of water.

Additionally or alternatively, in this or other embodiments each microporous graphite plate of the plurality of microporous graphite plates includes a plurality of first grooves at the first side to at least partially define the one or more water passages, and a plurality of second grooves at the second side to at least partially define the one or more air passages.

Additionally or alternatively, in this or other embodiments a cover plate is located at one or more of a first stack side and a second stack side of the stack of microporous graphite plates.

Additionally or alternatively, in this or other embodiments an air outlet is operably connected to the one or more air passages to output a flow of conditioned air from the condensing heat exchanger and water separator.

Additionally or alternatively, in this or other embodiments a difference between the first pressure and the second pressure is maintained below a bubble point of the microporous graphite plate to prevent the ingress of the flow of air through the microporous graphite plate and into the one or more water passages.

Additionally or alternatively, in this or other embodiments the second pressure is sub-ambient.

In yet another embodiment, an environmental control system includes a liquid-liquid heat exchanger, a pump, and a condensing heat exchanger and water separator. The liquid-liquid heat exchanger, the pump and the condensing heat exchanger and water separator are arranged in a serial arrangement to define a water coolant loop with a flow of water circulating therethrough. The condensing heat exchanger and water separator includes a microporous graphite plate, one or more water passages defined at a first side of the microporous graphite plate, and one or more air passages defined at a second side of the microporous graphite plate opposite the first side. An air inlet is operably connected to the one or more air passages to direct a flow of air through the one or more air passages at a first pressure, and a water inlet is operably connected to the one or more water passages to direct a flow of water through the one or more water passages at a second pressure lower than the first pressure. The microporous graphite plate is configured such that moisture condenses from the flow of air onto the second side and is wicked through the microporous graphite plate to the one or more water passages to join the flow of water.

Additionally or alternatively, in this or other embodiments a difference between the first pressure and the second pressure is maintained below a bubble point of the microporous graphite plate to prevent the ingress of the flow of air through the microporous graphite plate and into the one or more water passages.

Additionally or alternatively, in this or other embodiments the second pressure is sub-ambient.

Additionally or alternatively, in this or other embodiments the microporous graphite plate includes a plurality of first grooves at the first side to at least partially define the one or more water passages, and a plurality of second grooves at the second side to at least partially define the one or more air passages.

Additionally or alternatively, in this or other embodiments a vented bellows accumulator and flow metering orifice are arranged along the water coolant loop to maintain the selected second pressure of the flow of water.

Additionally or alternatively, in this or other embodiments the bellows accumulator is positioned along the water coolant loop between the pump and the condensing heat exchanger and water separator.

Additionally or alternatively, in this or other embodiments a temperature of the flow of water is maintained by thermal energy exchange with a flow of coolant at the liquid-liquid heat exchanger.

Additionally or alternatively, in this or other embodiments a water output line is fluidly connected to the water coolant loop. The water output line is configured to selectably remove water from the water coolant loop.

Additionally or alternatively, in this or other embodiments an output pump is located along the water output line.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of an environmental control system;
FIG. 2 is a schematic illustration of an embodiment of an integrated condensing heat exchanger and water separator;
FIG. 3a is a perspective view of an embodiment of a plurality of air passages; and
FIG. 3b is a perspective view of an embodiment of a plurality of water passages.

### DETAILED DESCRIPTION

A detailed description of one or more embodiments of the disclosed apparatus and method are presented herein by way of exemplification and not limitation with reference to the Figures.

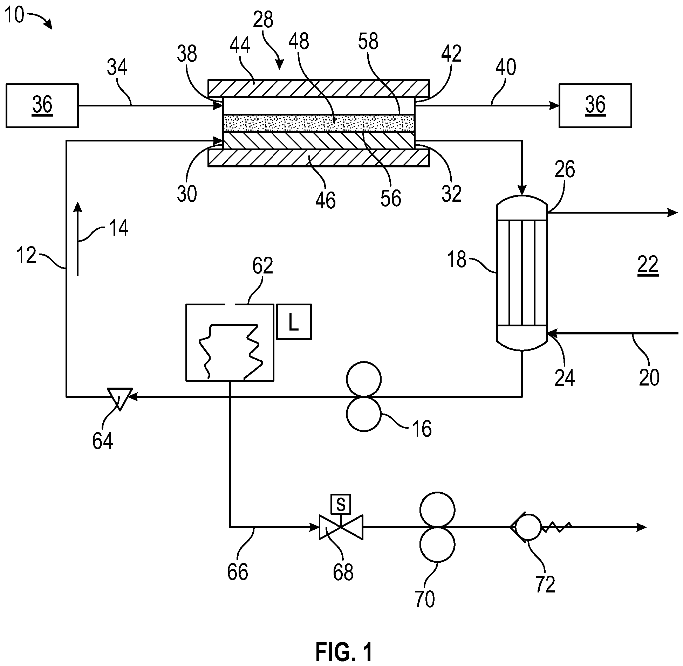

Referring now to FIG. 1, illustrated is an embodiment of an environmental control system 10 for, for example, a space vehicle. The system 10 utilizes a water coolant loop 12, through which a flow of water 14 is circulated by a pump 16. A temperature of the flow of water 14 is maintained by passing the flow of water 14 through a liquid-liquid heat exchanger 18. At the liquid-liquid heat exchanger 18, the flow of water 14 exchanges thermal energy with a flow of coolant 20 of a coolant loop 22, thus cooling the flow of water 14. In some embodiments, the flow of coolant 20 enters the liquid-liquid heat exchanger 18 at a coolant inlet 24 and exits the liquid-liquid heat exchanger 18 at a coolant outlet 26. In the embodiment illustrated, the pump 16 is located along the water coolant loop 12 downstream of the liquid-liquid heat exchanger 18, but in other embodiments the pump 16 may be located upstream of the liquid-liquid heat exchanger 18.

A condensing heat exchanger (CHX) and water separator 28 is located along the water coolant loop 12, in some embodiments upstream of the liquid-liquid heat exchanger 18. The flow of water 14 enters the CHX and water separator 28 at a water inlet 30 and exits the CHX and water separator 28 at a water outlet 32. Similarly, a flow of return air 34 from, for example, a vehicle cabin 36 enters the CHX and water separator 28 at an air inlet 38. The return air 34 is conditioned at the CHX and water separator 28 and output as a flow of conditioned air 40 as an air outlet 42. In some embodiments, the flow of conditioned air 40 is directed to the vehicle cabin 36.

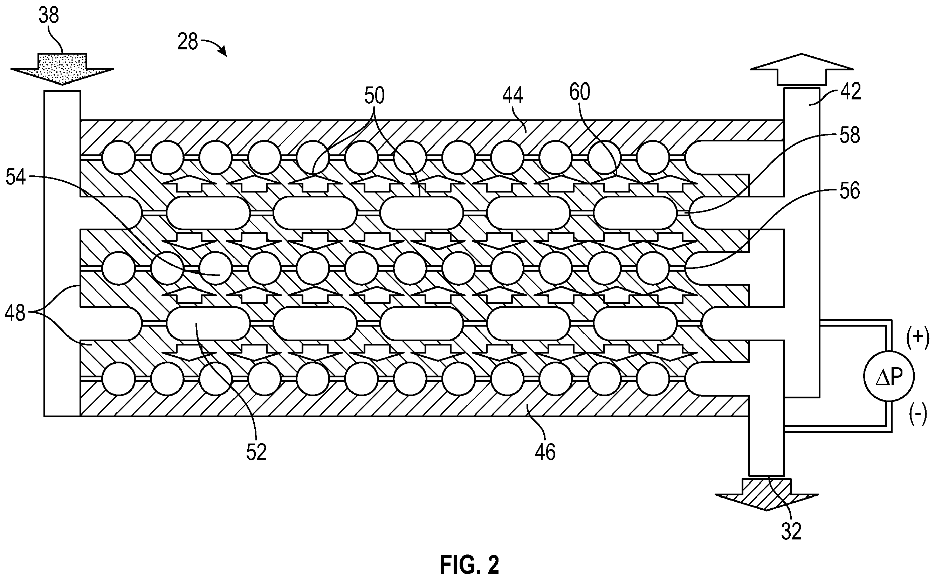

Referring now to the cross-sectional view of FIG. 2, the CHX and water separator 28 is illustrated in more detail. The CHX and water separator 28 includes a first cover plate 44 and a second cover plate 46, opposite the first cover plate 44, that are spaced apart. A plurality of microporous graphite plates 48 are stacked between the first cover plate 44 and the second cover plate 46. The cover plates 44, 46 and the microporous graphite plates 48 each have a plurality of grooves 50 defined therein, such that when stacked, the grooves 50 define a plurality of passages. Such passages are either air passages 52 or water passages 54, depending on the medium flowing therethrough.

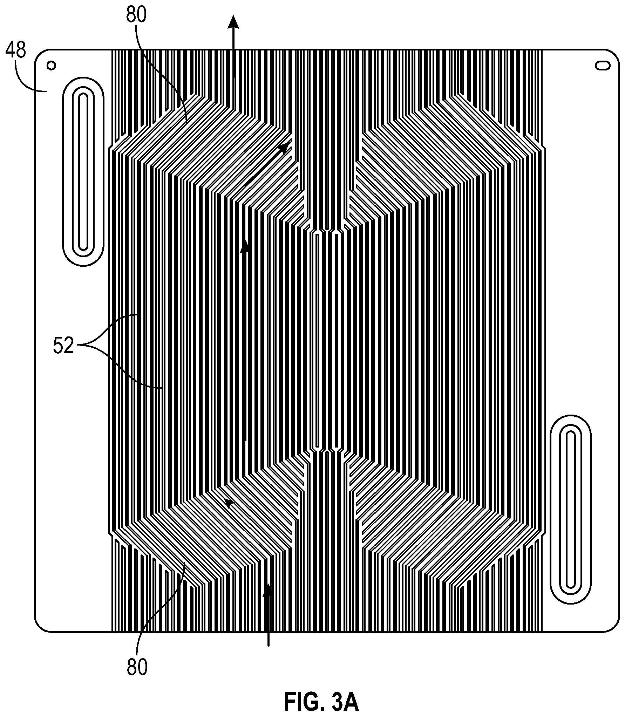

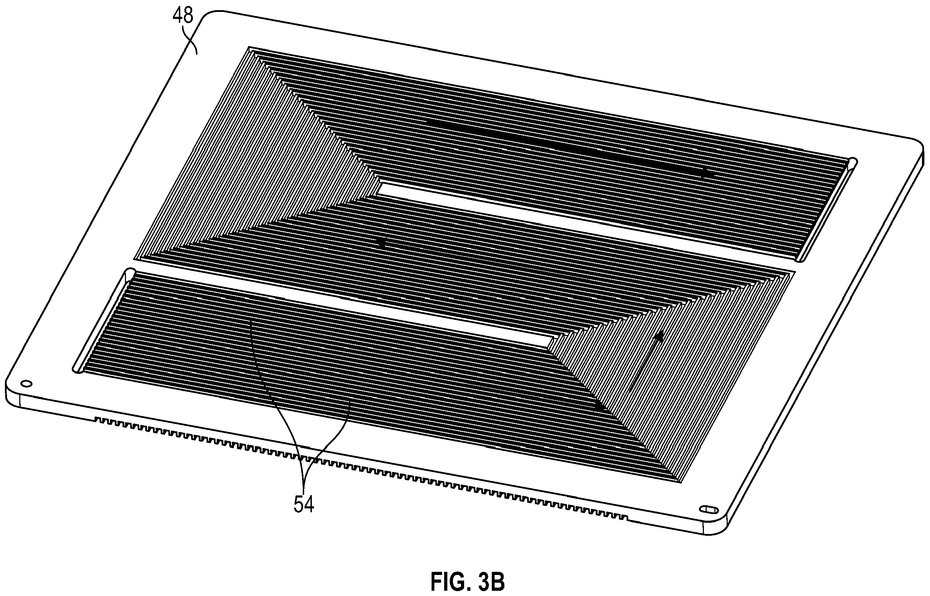

Thus, the CHX and water separator 28 has a plurality of alternating layers of air passages 52 and layers of water passages 54, with adjacent layers separated by a microporous graphite plate 48. Each water passage 54 is fluidly connected to the water inlet 30 and the water outlet 32 such that the flow of water 14 is directed through the plurality of water passages 54. Similarly, each air passage 52 is fluidly connected to the air inlet 38 and the air outlet 42 such that the return air 34 is directed into the plurality of air passages 52 from the air inlet 38, and the conditioned air 40 is directed from the plurality of air passages 52 to the air outlet 42. In some embodiments, the CHX and water separator 28 is a counterflow configuration. Referring to FIG. 3a, in some embodiments the plurality of air passages 52 has a single pass configuration, while as shown in FIG. 3b the plurality of water passages 54 has a multi-pass configuration, for example three passes as shown. It will be appreciated, however, that other numbers of passes may be utilized. The multi-pass configuration of the water passages 54 increases a velocity of the water therein, thereby increasing the heat transfer coefficient and reducing a chance of surface fouling.

A differential pressure (ΔP) is maintained between the airflow and the water coolant flow, such that the airflow pressure at air outlet 42 is greater than the water coolant flow pressure at water outlet 32, as indicated in FIG. 2. In some embodiments, the differential pressure is achieved by maintaining the water coolant flow at sub-ambient, which will be described in more detail below. In operation, the flow of relatively humid return air 34 is directed into the plurality of air passages 52 via the air inlet 38, and the flow of water 14 is introduced to the plurality of water passages 54 via the water inlet 30.

As the flow of water 14 flows on a first side 56 of the microporous graphite plate 48, and the return airflow 34 flows along a second side 58 of the microporous graphite plate 48, moisture from the return airflow 34 condenses onto the second side 58 of the microporous graphite plate 48. As the moisture condenses, a hydrophilic treatment of the microporous graphite plate 48 wicks the condensed moisture into a plurality of micropores of the microporous graphite plate 48. The condensed moisture 60 is urged into the plurality of water passages 54 at the first side 56 of the microporous graphite plate 48. The differential pressure is maintained below a bubble point of the microporous graphite plate 48 to prevent the ingress of airflow through the microporous graphite plate 48 and into the plurality of water passages 54. The flow of water 14 exits the CHX and water separator 28 at the water outlet 32, and the air flow, now as conditioned air 40 exits the CHX and water separator 28 at the air outlet 42.

Referring again to FIG. 3a, in some embodiments, the air passages 52 include offset passages 80. This will prevent any entrainment of water droplets that have yet to wick through the microporous layer into the air stream - the droplets will impinge into the sidewall of the flow passage and be wicked into the microporous material. This is primarily in the event the surface on the air side of the heat exchanger has been fouled locally to reduce its hydrophilic nature and make it somewhat hydrophobic - so the water has a harder time wicking through the microporous layer.

Returning now to FIG. 1, the system 10 further includes a vented bellows accumulator 62 and a flow metering orifice 64 located along the water coolant loop 12 to maintain the selected differential pressure. In some embodiments, the accumulator 62 and the flow metering orifice 64 are located between the pump 16 and the CHX and water separator 28.

Water or condensate is periodically removed from the water coolant loop 12 for processing, for example, when needed for use by the vehicle or when a water level in the accumulator 62 reaches a selected threshold. A water output line 66 is connected to the water coolant loop 12 for removal of the water. The water output line 66 includes a solenoid valve 68, an output pump 70 and a relief valve 72. When the solenoid valve 68 is opened and the output pump 70 is activated, water is urged along the water output line 66 and through the relief valve 72. When a desired volume of water has been removed from the water coolant loop 12, the output pump 70 is deactivated and the solenoid valve 68 is closed.

As described herein, the CHX and water separator 28 combines the CHX and water separator functions into a single, passive component thereby improving overall reliability of an environmental control system into which it is included.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An integrated condensing heat exchanger and water separator comprising:
a microporous graphite plate (48);
one or more water passages (54) defined at a first side of the microporous graphite plate;
one or more air passages (52) defined at a second side of the microporous graphite plate opposite the first side;
an air inlet (38) operably connected to the one or more air passages to direct a flow of air through the one or more air passages at a first pressure; and
a water inlet (30) operably connected to the one or more water passages to direct a flow of water through the one or more water passages at a second pressure lower than the first pressure;
wherein the microporous graphite plate is configured such that moisture condenses from the flow of air onto the second side and is wicked through the microporous graphite plate to the one or more water passages to join the flow of water.

2. The condensing heat exchanger and water separator of claim 1, wherein a difference between the first pressure and the second pressure is maintained below a bubble point of the microporous graphite plate to prevent the ingress of the flow of air through the microporous graphite plate and into the one or more water passages.

3. The condensing heat exchanger and water separator of any preceding claim, wherein the second pressure is sub-ambient.

4. The condensing heat exchanger and water separator of any preceding claim, wherein the microporous graphite plate includes:
a plurality of first grooves at the first side to at least partially define the one or more water passages; and
a plurality of second grooves at the second side to at least partially define the one or more air passages.

5. A condensing heat exchanger and water separator, comprising:
a plurality of microporous graphite plates (48) arranged in a stack, each microporous graphite plate having:
one or more water passages (54) defined at a first side of the microporous graphite plate; and
one or more air passages (52) defined at a second side of the microporous graphite plate opposite the first side;
an air inlet (38) operably connected to the one or more air passages to direct a flow of air through the one or more air passages at a first pressure; and
a water inlet (30) operably connected to the one or more water passages to direct a flow of water through the one or more water passages at a second pressure lower than the first pressure;
wherein the plurality of microporous graphite plates are configured such that moisture condenses from the flow of air onto the second side and is wicked through the microporous graphite plates to the one or more water passages to join the flow of water.

6. The condensing heat exchanger and water separator of claim 5, wherein each microporous graphite plate of the plurality of microporous graphite plates includes:
a plurality of first grooves at the first side to at least partially define the one or more water passages; and
a plurality of second grooves at the second side to at least partially define the one or more air passages.

7. The condensing heat exchanger and water separator of claim 5 or 6, further comprising a cover plate disposed at one or more of a first stack side and a second stack side of the stack of microporous graphite plates.

8. The condensing heat exchanger and water separator of any of claims 5-7, further comprising an air outlet operably connected to the one or more air passages to output a flow of conditioned air from the condensing heat exchanger and water separator.

9. The condensing heat exchanger and water separator of any of claims 5-8, wherein a difference between the first pressure and the second pressure is maintained below a bubble point of the microporous graphite plate to prevent the ingress of the flow of air through the microporous graphite plate and into the one or more water passages.

10. The condensing heat exchanger and water separator of any of claims 5-9, wherein the second pressure is sub-ambient.

11. An environmental control system, comprising:
a liquid-liquid heat exchanger;
a pump; and
a condensing heat exchanger and water separator (28);
wherein the liquid-liquid heat exchanger, the pump and the condensing heat exchanger and water separator are arranged in a serial arrangement to define a water coolant loop with a flow of water circulating therethrough; and
wherein the condensing heat exchanger and water separator includes:
a microporous graphite plate (48);
one or more water passages (54) defined at a first side of the microporous graphite plate;
one or more air passages (52) defined at a second side of the microporous graphite plate opposite the first side;
an air inlet (38) operably connected to the one or more air passages to direct a flow of air through the one or more air passages at a first pressure; and
a water inlet (30) operably connected to the one or more water passages to direct a flow of water through the one or more water passages at a second pressure lower than the first pressure;
wherein the microporous graphite plate is configured such that moisture condenses from the flow of air onto the second side and is wicked through the microporous graphite plate to the one or more water passages to join the flow of water.

12. The environmental control system of claim 11, wherein a difference between the first pressure and the second pressure is maintained below a bubble point of the microporous graphite plate to prevent the ingress of the flow of air through the microporous graphite plate and into the one or more water passages.

13. The environmental control system of claim 11 or 12, wherein the second pressure is sub-ambient; and/or
wherein the microporous graphite plate includes:
a plurality of first grooves at the first side to at least partially define the one or more water passages; and
a plurality of second grooves at the second side to at least partially define the one or more air passages.

14. The environmental control system of any of claims 11-13, further comprising a vented bellows accumulator and flow metering orifice arranged along the water coolant loop to maintain the selected second pressure of the flow of water, and preferably wherein the bellows accumulator is disposed along the water coolant loop between the pump and the condensing heat exchanger and water separator; and/or
wherein a temperature of the flow of water is maintained by thermal energy exchange with a flow of coolant at the liquid-liquid heat exchanger.

15. The environmental control system of any of claims 11-14, further comprising a water output line fluidly connected to the water coolant loop, the water output line configured to selectably remove water from the water coolant loop, and preferably further comprising an output pump disposed along the water output line.
